# EUROPÄISCHE PATENTSCHRIFT

(11) **EP 0 574 350 B1**
(45) Veröffentlichungstag und Bekanntmachung des Hinweises auf die Patenterteilung: **18.12.1996**
(21) Anmeldenummer: 93810392.6
(22) Anmeldetag: 28.05.1993
(51) Int. Cl.: G01N 21/88

(54) **Verfahren zur Prüfung der Kontinuität der Längsstege von Mehrkammerhohlprofilen**
Method for inspecting the continuity of the longitudinal bars of multiple chamber hollow profiles
Procédé de l'inspection de la continuité des barettes longitudinales de profilés creux à plusieurs chambres

(30) Priorität: 11.06.1992 CH 1856/92
(43) Veröffentlichungstag der Anmeldung: 15.12.1993
(73) Patentinhaber: Alusuisse Technology & Management AG, 8212 Neuhausen am Rheinfall (CH)
(72) Erfinder: Maier, Adalbert, W-7709 Hilzingen 6 (DE)

(56) Entgegenhaltungen:
- GB-A- 509 851
- GB-A- 2 021 274

## Beschreibung

Die Erfindung betrifft ein Verfahren zur Prüfung der Kontinuität der Längsstege von Mehrkammerhohlprofilen.

Für gewisse Anwendungen von Mehrkammerhohlprofilen aus stranggepresstem Aluminium besteht der Bedarf nach einer Prüfmöglichkeit der Hohlkammerwände auf Fehlstellen.

Während bei verhältnismässig kleinen Profillängen eine einfache visuelle Kontrolle von den Stirnseiten der Profile her ausreichend sein mag, ist eine zuverlässige Prüfung auf Fehlstellen bei Profillängen von mehreren Metern mit dieser einfachen Sichtkontrolle nicht mehr möglich. Es ist daher bereits vorgeschlagen worden, Fehlstellen mittels Ultraschall- oder Wirbelstromverfahren zu lokalisieren. Diese Prüfmethoden sind jedoch zu wenig selektiv und haben sich daher in der Praxis nicht durchgesetzt.

GB-A-2021274 beschreibt ein optisches Prüfverfahren, in dem der Körper axial beleuchtet wird, um ein Bild zu erzeugen.

Angesichts dieser Gegebenheiten hat sich der Erfinder die Aufgabe gestellt, ein Verfahren zu schaffen, mit welchem die Kontinuität der Längsstege von Mehrkammerhohlprofilen auf einfache Art geprüft werden kann.

Zur erfindungsgemässen Lösung der Aufgabe führt, dass das Innere jeweils einer der Hohlkammern mittels einer in diese eingesetzten Lichtquelle beleuchtet und die Beleuchtungsstärke im Innern der benachbarten, stirnseitig beidends lichtdicht verschlossenen Hohlkammer beobachtet wird.

Um Fehlstellen in den Längsstegen für das Auge noch besser sichtbar zu machen, kann die Lichtquelle pulsierend ein- und ausgeschaltet werden.

Bei einer zweckmässigen Durchführungsart des erfindungsgemässen Verfahrens wird die Lichtquelle in Längsrichtung des Mehrkammerhohlprofils durch die Hohlkammer geführt.

Das Verfahren ist insbesondere geeignet, zur Prüfung von aus Aluminium stranggepressten Mehrkammerhohlprofilen.

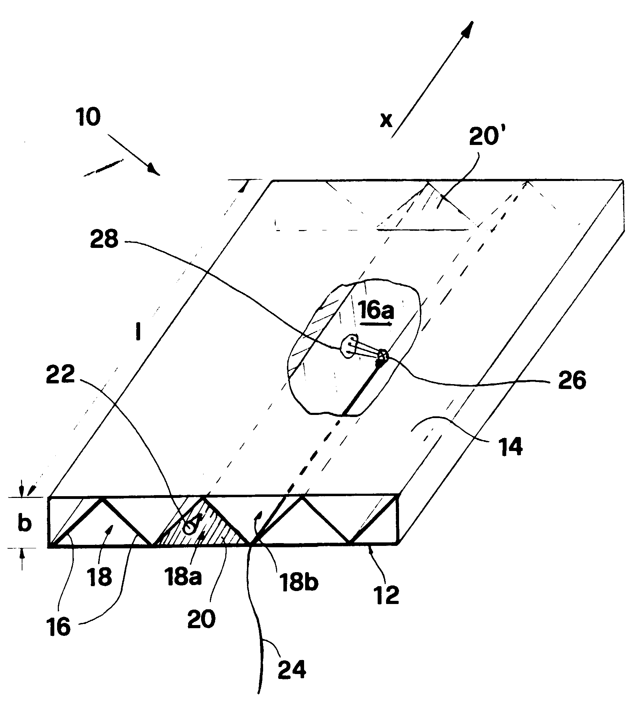

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine teilweise geschnittene Schrägsicht auf ein Mehrkammerhohlprofil mit eingesetztem Beleuchtungskörper.

Ein aus Aluminium stranggepresstes Mehrkammerhohlprofil 10 -- beispielsweise ein Fachwerkbodenprofil für den Wagenboden von Schienenfahrzeugen -- weist eine Bodenplatte 12 sowie eine parallel zu dieser in einem Abstand b von beispielsweise 50 mm angeordnete Deckplatte 14 auf. Die Profillänge 1 beträgt beispielsweise 20 m. Bodenplatte 12 und Deckplatte 14 sind über in Strangpress- bzw. Profillängsrichtung x verlaufende Längsstege 16 und Bildung von Hohlkammern 18 miteinander verbunden.

Eine auf Fehlstellen zu prüfende Hohlkammer 18a ist stirnseitig beidends mit je einer Abdeckung 20, 20' -- beispielsweise aus Gummi -- lichtdicht verschlossen. In einer der Abdeckungen ist ein trichterförmiges Schaurohr 22 integriert, an welches zur Beobachtung des Kammerinnern das beobachtende Auge lichtdicht angelegt werden kann. In der benachbarten Hohlkammer 16b ist eine über ein elektrisches Kabel 24 an eine -- in der Zeichnung nicht dargestellte -- Stromversorgung angeschlossene Lichtquelle 26 eingelegt. Diese Lichtquelle 26, beispielsweise eine Glühbirne oder eine Leuchtstoffröhre, wird durch Ziehen am Kabel 24 über die gesamte Profillänge 1 durch die Hohlkammer geführt.

Bewegt sich nun die Lichtquelle 26 an einem im die benachbarten Hohlkammern 18a, b trennenden Längssteg 16a vorhandenen Durchbruch 28 vorbei, so dringen von der Lichtquelle 26 ausgehende Lichtstrahlen durch diese Fehlstellen in die verdunkelte Hohlkammer 18a ein, wobei diese durch mehrfache Reflektion der Lichtstrahlen an den Kammerwänden beleuchtet wird.

Die in der Hohlkammer 16a infolge des Durchbruchs 28 im Längssteg 16a auftretende Beleuchtung kann über das trichterförmige Schaurohr 22 von blossem Auge beobachtet werden. Durch das Auftreten eines Beleuchtungsmaximums bei einer bestimmten Position der Lichtquelle 26 innerhalb der Hohlkammer 18b kann der entsprechende Durchbruch 28 im Längssteg 16a auf einfache Weise lokalisiert werden.

Die Beleuchtungsstärke und die Lichtverteilungskurve innerhalb einer Hohlkammer 18 sind abhängig von den Hohlkammerdimensionen sowie vom Reflektionsgrad an den Kammerwänden. Die Art und die Stärke der Lichtquelle 26 wird jeweils auf diese Parameter abgestimmt. Die Lichtquelle kann auch batteriebetrieben sein, so dass an Stelle eines elektrischen Kabels 24 eine Schnur genügt.

Durch Eichprofile d.h. Profile mit definierten Fehlstellengrössen -- beispielsweise Bohrungen -- kann zumindest eine qualitative Aussage über die Grösse eines festgestellten Durchbruchs 28 gemacht werden. Versuche mit Eichprofilen einer definierten Bohrung haben gezeigt, dass Fehlstellen mit einem Durchmesser bis zu 0,5 mm auf eine Beobachtungsdistanz von 20 m mit dem erfindungsgemässen Verfahren von blossem Auge noch problemlos erfasst werden können.

An Stelle der Beobachtung mit blossem Auge durch das trichterförmige Schaurohr 22 kann auf das Schaurohr 22 auch ein Beleuchtungsmesser aufgesetzt werden.

## Patentansprüche

1. Verfahren zur Prüfung der Kontinuität der Längsstege von Mehrkammerhohlprofilen,
dadurch gekennzeichnet,
dass das Innere jeweils einer der Hohlkammern (18b) mittels einer in diese eingesetzten Lichtquelle (26) beleuchtet und die Beleuchtungsstärke im Innern der benachbarten, stirnseitig beidends lichtdicht verschlossenen Hohlkammer (18a) beobachtet wird.

2. Verfahren nach Anspruch 1, dadurch gekennzeichnet, dass die Lichtquelle (26) in Profillängsrichtung x durch die Hohlkammer (16b) geführt wird.

3. Verfahren nach Anspruch 1 oder 2, dadurch gekennzeichnet, dass die Lichtquelle (26) pulsierend ein- und ausgeschaltet wird.

4. Anwendung des Verfahrens nach einem der Ansprüche 1 - 3 zur Prüfung von aus Aluminium stranggepressten Mehrkammerhohlprofilen.

## Claims

1. Method for testing the continuity of the longitudinal partitions of multi-compartment hollow sections, characterised in that the interior of each of the hollow chambers (18b) is illuminated by means of a light source (26) inserted therein and the illuminance in the interior of the adjacent hollow chamber (18a) closed in a light-proof manner at both end faces is monitored.

2. Method according to claim 1, characterised in that the light source (26) is guided through the hollow chamber (16b) in the longitudinal direction x of the section.

3. Method according to claim 1 or claim 2, characterised in that the light source (26) is switched on and off in a pulsating manner.

4. Use of the method according to one of claims 1 - 3 for testing multi-compartment hollow sections extruded from aluminium.

## Revendications

1. Procédé d'inspection de la continuité des nervures longitudinales de profilés creux à plusieurs chambres,
caractérisé
par le fait que l'on éclaire l'intérieur de chacune des chambres (18b) au moyen d'une source lumineuse (26) que l'on y insère et que l'on observe l'intensité de l'éclairement à l'intérieur de la chambre voisine (18a), obturée aux deux extrémités frontales de façon étanche à la lumière.

2. Procédé selon la revendication 1, caractérisé par le fait que l'on fait passer la source lumineuse (26) à travers la chambre (16b) selon la direction longitudinale x du profilé.

3. Procédé selon la revendication 1 ou 2, caractérisé par le fait que l'on met en circuit et hors circuit la source lumineuse (26) de façon pulsatoire.

4. Application du procédé selon l'une des revendications 1-3 pour l'inspection de profilés creux à plusieurs chambres extrudés en aluminium à la presse.
